# NEUE EUROPÄISCHE PATENTSCHRIFT

(11) **EP 0 206 285 B2**
(45) Veröffentlichungstag und Bekanntmachung des Hinweises auf die Entscheidung über den Einspruch: **26.02.1997**
(45) Hinweis auf die Patenterteilung: 28.02.1990
(21) Anmeldenummer: 86108449.9
(22) Anmeldetag: 20.06.1986
(51) Int. Cl.: C02F 1/28, B01J 47/00

(54) **Filterpatrone zur Verbesserung der Qualität von Trinkwasser**
Filter cartridge for upgrading drinking water quality
Cartouche filtrante pour améliorer la qualité de l'eau potable

(30) Priorität: 27.06.1985 DE 3522966; 09.09.1985 DE 3532052; 05.10.1985 DE 3535678
(43) Veröffentlichungstag der Anmeldung: 30.12.1986
(73) Patentinhaber: Alhäuser, Erich, D-56235 Ransbach-Baumbach (DE)
(72) Erfinder: Alhäuser, Erich, D-5412 Ransbach-Baumbach (DE); Bendlin, Herbert, Dr., D-5412 Ransbach-Baumbach (DE)
(74) Vertreter: Jochem, Bernd, Dipl.-Wirtsch.-Ing.

(56) Entgegenhaltungen:
- EP-A- 0 155 645
- DE-A- 2 919 901
- DE-A- 3 001 674
- DE-C- 3 248 126
- FR-A- 2 102 655
- FR-A- 2 207 092
- US-A- 2 017 456
- US-A- 3 208 595
- Prospekt "BRITA-Wasserfilter"

## Beschreibung

Die Erfindung betrifft eine Filterpatrone zur Verbesserung der Qualität von Trinkwasser, bestehend aus einem mit Ionenaustauscherharz und/oder Aktivkohle sowie einem bakteriostatisch wirkenden Stoff, insbesondere Silber, in dissoziierbarer Form gefüllten Gefäß mit siebartig abgedeckten Öffnungen für eine hauptsächlich abwärts gerichtete Hindurchleitung des Wassers.

Es ist in der Praxis bekannt, daß sich in solchen Filterpatronen Bakterien in großern Ausmaß vermehren können, wenn die Patronen austrocknen, da dann der bakteriostatisch wirkende Stoff, insbesondere Silber, in dissoziierbarer Form nicht mehr zur Wirkung kommen können. Die meisten Geräte, in denen derartige Patronen eingesetzt sind, sorgen deshalb durch Anordnung der Patrone innerhalb eines das behandelte Wasser auffangenden Behälter mit hochgelegener Auslaßöffnung dafür, daß die Patrone ständig mit Wasser gefüllt bleibt. Dennoch läßt sich die Gefahr des Austrocknens nicht immer und nicht mit hinreichender Sicherheit vermeiden, insbesondere dann nicht, wenn der vorerwähnte Behälter zum Ausschütten des Wassers bestimmt ist und danach nicht ausreichend wieder aufgefüllt wird (BRITA Wasserfilter, ERLO-MAT Trinkwasserfilter).

Aufgabe der Erfindung ist es, auch für solche Fälle ein Austrocknen der Patronenfüllung mit der Gefahr der Keimvermehrung zu verhindern.

Eine erste Lösung der vorstehenden Aufgabe besteht darin, daß das Gefäß nur in seinem unteren Bereich einen von dessen Boden ausgehenden Sammelraum für eine begrenzte im unkren Bereich der Patrone zurückgehaltene Wassermenge aufweist, der von der Auslaßöffnung getrennt ist.

Die Erfindung beruht auf der Erkenntnis, daß es, zumindest für eine begrenzte Zeit, nicht unbedingt erforderlich ist, den Wasserspiegel innerhalb der Filterpatrone bis zum oberen Ende der Harzschüttung aufrecht zu erhalten. Es reicht vielmehr in der Praxis aus, wenn im unteren Bereich der Patrone eine begrenzte Wassermenge zurückgehalten wird, die durch Berührung mit der Füllung in diese hinein diffundiert. Durch die verbleibende Restfeuchtigkeit kann die bakteriostatische Wirkung des in der Füllung enthaltenen antibakteriellen Wirkstoffs, insbesondere Silber, zumindest über einen begrenzten Zeitraum aufrecht erhalten werden.

Filtereinrichtungen mit Getäßausbildungen derart, daß nach Beendigung des Filtriervorgangs eine definierte Restmenge an Flüssigkeit zurückbleibt, sind an sich bereits durch die US-PS-4 256 585 und 4 162 054 bekannt. Dabei handelt es sich jedoch um Kaffee- oder Teefilter zum einmaligen Aufguß eines entsprechenden Getränks, wobei die genannten Gefäßausbildungen dem Nachtropfen durch Rückhalten einer Restmenge der durch die Filterfüllung hindurchgetretenen Aufgußflüssigkeit begegnen sollen. Da diese Filter anschließend geleert und für jeden späteren Aufguß neu gefüllt werden, ist das der Erfindung zugrunde liegende Problem der Keimvermehrung beim Austrocknen der Filterfüllung dort nicht vorhanden.

Eine zweite Lösung der vorstehenden Aufgabe ist durch die Merkmale des Anspruchs 7 definiert.

Hierdurch wird der bei der nach abwärts gerichteten Hindurchleitung des Wassers normalerweise am unteren Ende der Patrone gelegenen Auslaß auf ein höheres Niveau verlegt, so daß die darunter gelegene Wassermenge von selbst in der Patrone zurückgehalten wird, gleichzeitig diese Wassermenge beim Gebrauch der Patrone aber mitherausgespült und dadurch erneuert wird. Eine Alterung des sich in toten Räumen sammelnden Wassers wird somit vermieden.

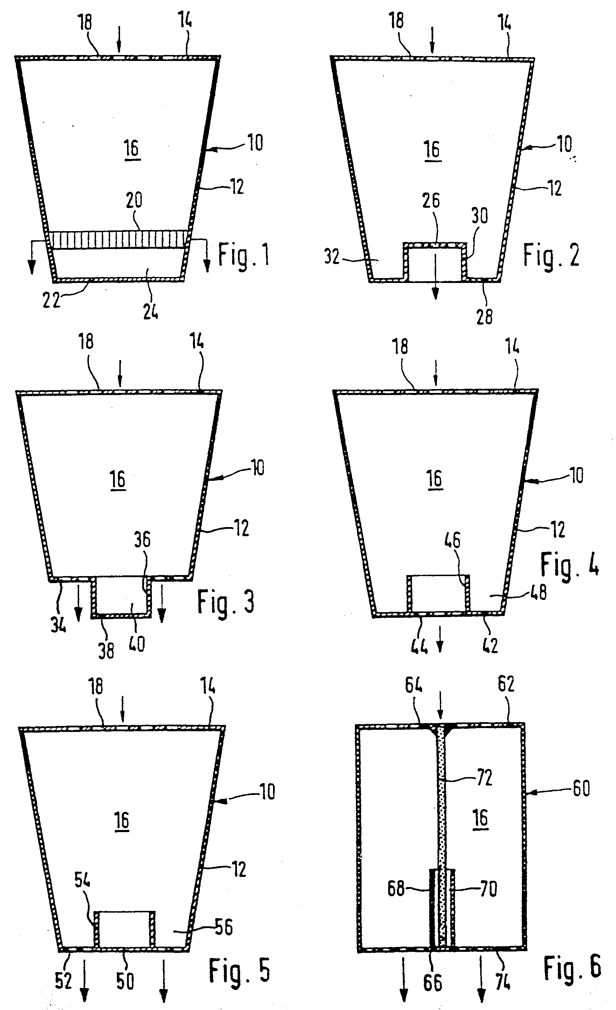

Vorteilhafte Ausgestaltungen der Erfindung ergeben sich aus den Unteransprüchen sowie der nachfolgenden Beschreibung einiger in den beigefügten Figuren 1 bis 8 im Vertikalschnitt schematisch dargestellter Ausführungsbeispiele.

Bei den Ausführungsbeispielen nach den Figuren 1 bis 5 ist übereinstimmend mit 10 das kegelstumpfförmige Gefäß einer Filterpatrone bezeichnet, die eine Mantelwand 12 und eine Oberwand 14 aufweist. Die Patrone ist mit einer wassierdurchlässigen Behandlungsmasse 16 in Form von Ionenaustauscherharz und/oder Aktivkohle sowie einem bakteriostatisch wirkenden Stoff, insbesondere Silber, in dissoziierbarer Form gefüllt, die von dem durch eine siebartig abgedeckte Einlaßöffnung 18 in der Oberwand 14 eingeleiteten Wasser nach abwärts durchströmt wird, um die Patrone mit verbesserter Qualität durch eine Auslaßöffnung in deren unterem Bereich wieder zu verlassen.

In Fig. 1 ist die mit 20 bezeichnete Auslaßöffnung von einer in der Mantelwand 12 der Patrone mit Abstand über deren ebenen und geschlossenen Boden 22 angeordneten Perforation gebildet, wodurch in dem darunter liegenden Teil des Gefäßes 10 ein Sammelraum 24 entsteht, in welchem zwangsläufig eine begrenzte Wassermenge zurückgehalten wird, die genügt, die Behandlungsmasse in der gesamten Patrone ausreichend feucht zu halten, damit sich die Wirkungen des antibakteriellen Stoffes entfalten und die Vermehrung von Bakterien verhindert werden können.

In Fig. 2 ist die Auslaßöffnung 26 im Zentrum des Bodens oberhalb der den gegenüber vertieft angeordneten ringförmigen Bodenfläche 28 angeordnet, von der eine die siebartig abgedeckte Öffnung 26 umschließende Ringwand 30 sich nach oben erstreckt. Ein dem Sammelraum 24 nach Fig. 1 entsprechender Sammelraum 32 ist hierbei unterhalb der Öffnung 26 zwischen der Ringwand 30 und der Mantelwand 12 des Gefäßes 10 gebildet.

In Fig. 3 enthält der Behälterboden eine siebartig abgedeckte Auslaßöffnung 34 in Ringform und hat innerhalb dieser Öffnung einen an eine Kragenwand 36 anschließenden vertieften und geschlossenen Teil 38, über dem ein Sammelraum 40 gebildet ist.

In Fig. 4 ist der Behälterboden 42 eben ausgebildet und enthält in seinem zentralen Teil eine kreisförmige, siebartige abgedeckte Auslaßöffnung 44, die von einer sich vom Boden 42 nach aufwärts erstreckten Ringwand 46 umschlossen ist. Die Höhe der Ringwand 46 bestimmt das Volumen eines zwischen der Ringwand und der Mantelwand 12 des Behälters gebildeten Sammelraums 48.

In Fig. 5 ist der Behälterboden 50 ebenfalls eben ausgebildet und im Außenbereich mit einer ringförmigen, siebartig abgedeckten Auslaßöffnung 52 versehen, die am Innenumfang durch eine von Behälterboden 50 ausgehende aufwärts gerichtete Ringwand 54 begrenzt ist. Innerhalb der Ringwand 54 ist über dem Behälterboden 50 ein Sammelraum 56 gebildet, dessen Volumen von der Höhe der Ringwand 54 bestimmt wird.

Bei den vorbeschriebenen Ausführungsbeispielen nach den Figuren 1 bis 5 bleibt, wie bereits zum Ausführungsbeispiel nach Fig. 1 erwähnt, in dem jeweiligen Sammelraum stets eine genügend große Wassermenge zurück, um die gesamte Behandlungsmasse innerhalb der Patrone so feucht zu halten, daß der darin enthaltene bakteriostatisch wirkende Stoff seine Wirkung entfalten und die Ausbreitung von Mikroorganismen wie z. B. Bazillen und Keimen verhindern kann.

Fig. 6 zeigt eine Patrone mit einem zylindrischen Gefäß 60, das in seiner Oberwand 62 wiederum eine siebartig abgedeckte Einfüllöffnung 64 aufweist und im unteren Bereich ähnlich wie bei dem vorbeschriebenen Ausführungsbeispiel nach Fig. 5 ausgebildet ist. Der geschlossene Teil des Behälterbodens 66 und die daran ansetzende Ringwand 68 haben jedoch im Verhältnis zum Durchmesser des Gefäßes 60 einen wesentlich kleineren Durchmesser, wobei demgegenüber die Ringwand 68 eine wesentlich größere Höhe aufweist. In den von der Ringwand 68 umschlossenen Sammelraum 70 ragt ein Docht 72 aus Vlies, der an der Oberwand 62 der Patrone auf geeignete Weise festgelegt ist. Die Auslaßöffnung ist mit 74 bezeichnet.

Der Docht 72 bildet ein Element mit Kapillarstruktur, in welchem das Wasser aus dem Behälter 70 aufsteigt und dadurch die Befeuchtung der Behandlungsmasse vor allem im oberen Teil der Patrone wesentlich verbessert.

Es versteht sich von selbst, daß anstelle eines Dochtes aus Vlies auch ein anderes Material verwendet werden kann, das dank seiner Kapillarstruktur das Wasser aus dem Sammelraum 70 nach oben und in das Behandlungsmaterial fördert.

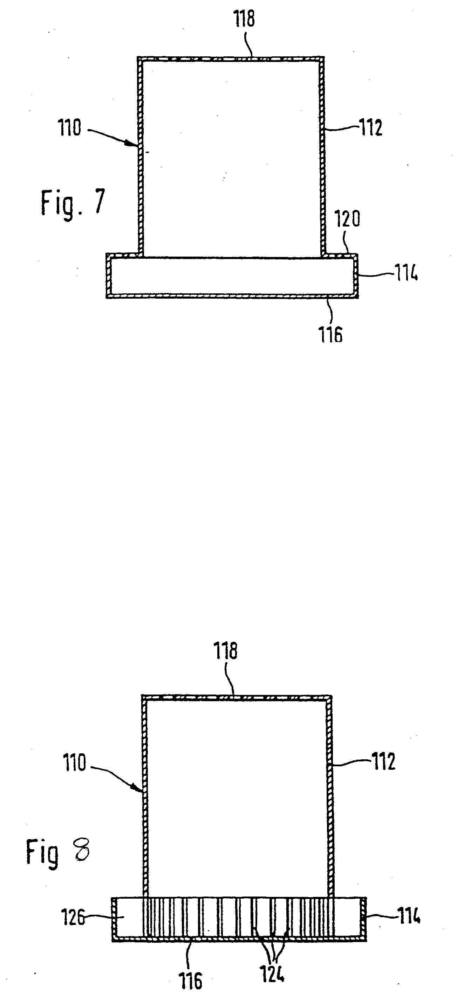

In Fig. 7 ist mit 110 das rotationssymmetrisch ausgebildete Gehäuse einer Filterpatrone zur Verbesserung der Qualität von Trinkwasser bezeichnet, das eine (nicht gezeigte) Füllung aus Ionenaustauscherharz und/oder Aktivkohle sowie einem bakteriostatisch wirkenden Stoff, insbesondere Silber, in dissoziierbarer Form enthält. Das Gefäß 110 besteht aus einem verhältnismäßig langen zylindrischen Oberteil 112 und einem demgegenüber nur kurzen, aber im Durchmesser wesentlich größeren Unterteil 114 mit einem geschlossenen Boden 116. Das offene obere Ende des Oberteils 112 ist, wie bei 118 dargestellt, zur Bildung einer Einlaßöffnung siebartig abgedeckt. Eine entsprechende siebartige Abdeckung 120 zwischen dem Oberteil 112 und dem Unterteil 114 bildet nach oben gerichtete Auslaßöffnungen der Patrone und verbindet zugleich das Oberteil 112 und das Unterteil 114 miteinander.

Beim Gebrauch der Patrone füllt sich zunächst das innere der Patrone mit Wasser, und es tritt dann soviel behandeltes Wasser durch die siebartige Abdeckung 120 aus der Patrone aus, wie durch die siebartige Abdeckung 118 nachgegossen wird. Wird das Nachgießen abgebrochen, entleert sich das Oberteil 112 des Gefäßes, während das Unterteil 114 gefüllt bleibt und durch Diffusion in den oberen Teil für eine ständige Feuchthaltung der darin enthaltenen Füllung sorgt. Bei erneuter Ingebrauchnahme der Patrone wird das im Gefäßunterteil 114 verbliebene Wasser durch das nachgegossene Wasser herausgespült und durch das aus dem Oberteil 112 nachströmende Wasser ersetzt.

In einer gegenüber Fig. 7 abgeänderten Ausführungsform kann sich die Mantelwand des oberen Gefäßteils 112 in den unteren Gefäßteil 114 hinein fortsetzen. Dabei ist die siebartige Abdeckung 120, wenn auch auf nunmehr höherem Niveau, wiederum am oberen Ende des unteren Gefäßteils 114 angeordnet und dadurch der gesamte untere Gefäßteil 114 mit Ionenaustauscherharz und/oder Aktivkohle sowie dem bakteriostatisch wirkenden Stoff gefüllt.

Bei dem Ausführungsbeispiel nach Fig. 8 erstreckt sich gegenüber Fig. 7 die Mantelwand des oberen Gefäßteils 112 bis zum Boden 116 des unteren Gefäßteils 114 und ist über diesem mit Schlitzen 124 zur Bildung siebartig abgedeckter Durchlässe versehen, durch welche die nur innerhalb der Mantelwand des oberen Gefäßteils 112 enthaltene Füllung am Heraustreten gehindert wird. Der zwischen der Mantelwand des oberen Gefäßteils 112 und seiner eigenen Mantelwand eingeschlossene Ringraum 126 des unteren Gefäßteils 114 ist demgegenüber leer, so daß die in Fig. 7 gezeigte siebartige Abdeckung 120 der nach oben gerichteten Öffnung zwischen den beiden Mantelwänden entfallen kann.

## Patentansprüche

1. Filterpatrone zur Verbesserung der Qualität von Trinkwasser, bestehend aus einem mit lonenaustauscherharz und/oder Aktivkohle sowie einem bakteriostatisch wirkenden Stoff, insbesondere Silber,in dissoziierbarer Form gefüllten Gefäß mit siebartig abgedeckten Öffnungen für eine hauplsächlich abwärts gerichtete Hindurchleitung des Wassers, *dadurch gekennzeichnet*, daß das Gefäß (10; 60) nur in seinem unteren Bereich einen von dessen Boden (22; 28; 38; 42; 50; 66) ausgehenden Sammelraum (24; 32; 40; 48; 56; 70) für eine begrenzte, im unteren Bereich der Patrone zurückgehaltene Wassermenge aufweist, wobei der Sammelraum von der Auslaßöffnung (20; 26; 34; 44; 52; 74) getrennt ist.

2. Filterpatrone nach Anspruch 1, *dadurch gekennzeichnet*, daß die Auslaßöffnung (20) mit Abstand über dem geschlossenen Gefäßboden (22) an der Seiten- oder Mantelwand (12) des Gefäßes angeordnet und der Sammelraum (24) von dem darunter gebildeten Gefäßteil gebildet ist (Fig. 1).

3. Filterpatrone nach Anspruch 1, *dadurch gekennzeichnet*, daß die Auslaßöffnung (26; 34) am Boden des Gefäßes (10) angeordnet ist und einen kleineren Querschnitt als die Bodenfläche aufweist und daß der geschlossene Teil der Bodenfläche (28, 38) ganz oder teilweise gegenüber dem die Auslaßöffnung (26; 34) enthaltenden Teil vertieft angeordnet ist (Fig. 2 und 3).

4. Filterpatrone nach Anspruch 1, *dadurch gekennzeichnet*, daß die Auslaßöffnung (44; 52) am Boden des Gefäßes (10) angeordnet ist und einen kleineren Querschnitt als die Bodenfläche aufweist und daß der geschlossene Teil der Bodenfläche (42; 50) durch eine vom Boden aufragende Trennwand (46; 54) von der Auslaßöffnung (44; 52) getrennt ist (Fig. 4 und 5).

5. Filterpatrone nach einem der vorhergehenden Ansprüche, *dadurch gekennzeichnet*, daß sich von dem Sammelraum (70) nach aufwärts bis in den oberen Bereich des Gefäßes wenigstens ein Element mit Kapillarstruktur (72) erstreckt (Fig. 6).

6. Filterpatrone nach Anspruch 5, *dadurch gekennzeichnet*, daß das Element (72) ein Docht aus Faservlies ist.

7. Filterpatrone zur Verbesserung der Qualität von Trinkwasser, bestehend aus einem mit einem Ionenaustauscherharz und/oder Aktivkohle sowie einem bakteriostatisch wirkenden Stoff, insbesondere Silber, in dissoziierbarer Form gefüllten Gefäß mit siebartig abgedeckten Durchlaßöffnungen für eine hauptsächlich abwärts gerichtete Hindurchleitung des Wassers, *dadurch gekennzeichnet*, daß das Gefäß nur in seinem unteren Bereich einen von seinem Boden ausgehenden Sammelraum zur Rückhaltung einer begrenzten Wassermenge aufweist und daß der Sammelraum innerhalb eines sich gegenüber einem oberen Teil (112) des Gefäßes (110) sprunghaft erweiternden unteren Gefäßteils (114) gebildet ist, der sich im Bereich der Erweiterung nach oben zur Bildung des Auslasses der Patrone öffnet.

8. Filterpatrone nach Anspruch 7, *dadurch gekennzeichnet*, daß sich das Gefäß (110) auf seinem Gesamtumfang erweitert.

9. Filterpatrone nach Anspruch 8, *dadurch gekennzeichnet*, daß sich die Auslaßöffnung über den gesamten Umfang der Erweiterung erstreckt.

10. Filterpatrone nach Anspruch 8 oder 9, *dadurch gekennzeichnet*, daß sich die Mantelwand des oberen Gefäßteils (112) über die Erweiterung hinaus in den unteren Gefäßteil (114) hinein fortsetzt (Fig. 8).

11. Filterpatrone nach Anspruch 10, *dadurch gekennzeichnet*, daß die Mantelwand des oberen Gefäßteils (112) mit Abstand vor dem Gefäßboden (116) endet.

12. Filterpatrone nach Anspruch 11, *dadurch gekennzeichnet*, daß die Mantelwand des oberen Gefäßteils (112) zur Begrenzung der Füllung auf den davon umschlossenen Bereich des Gefäßinneren bis zum Boden (116) des Gefäßes hinabreicht und oberhalb desselben mit Schlitzen (124) zur Bildung einer siebartig abgedeckten Durchlaßöffnung versehen ist.

## Claims

1. A filter cartridge for improving the quality of drinking water, comprising a vessel filled with ion-exchange resin and/or activated carbon and also a bacteriostatically acting material, in particular silver, in dissociable form, said vessel having openings which are covered in sieve-like manner and which are intended for the principally downwardly directed passage of water, characterised in that the vessel only in its lower region (10; 60) has a collecting chamber (24; 32; 40; 48; 56; 70) starting from the bottom (22; 28; 38; 42; 50; 66) thereof for a limited amount of water retained in the lower region of the cartridge, which collecting chamber is separated from the outlet opening (20; 26; 34; 44; 52; 74).

2. A filter cartridge according to Claim 1, characterised in that the outlet opening (20) is arranged at a distance above the closed vessel bottom (22) on the lateral or circumferential wall (12) of the vessel and the collecting chamber (24) is formed by the part of the vessel formed therebelow (Figure 1).

3. A filter cartridge according to Claim 1, characterised in that the outlet opening (26; 34) is provided at the bottom of the vessel (10) and is of smaller cross-section than the bottom surface, and in that the closed part of the bottom surface (28, 38) is arranged wholly or partly recessed in relation to the part containing the outlet opening (26; 34) (Figures 2 and 3).

4. A filter cartridge according to Claim 1, characterised in that the outlet opening (44; 52) is provided at the bottom of the vessel (10) and is of smaller cross-section than the bottom surface, and in that the closed part of the bottom surface (42; 50) is separated from the outlet opening (44; 52) by a dividing wall projecting (46; 54) from the bottom (Figures 4 and 5).

5. A filter cartridge according to any one of the preceding Claims, characterised in that at least one member having capillary structure (72) extends upwards from the collecting chamber (70) into the upper region of the vessel (Figure 6).

6. A filter cartridge according to Claim 5, characterised in that the member (72) is a wick of fibre mat.

7. A filter cartridge for improving the quality of drinking water, comprising a vessel filled with an ion-exchange resin and/or activated carbon and also a bacteriostatically acting material, in particular silver, in dissociable form, said vessel having outlet openings which are covered in sieve-like manner and which are intended for the principally downwardly directed passage of water, characterised in that the vessel only in its lower region has a collecting chamber starting from its bottom for retaining a limited amount of water, and in that the collecting chamber is formed inside a lower vessel part (114) which widens abruptly in relation to the upper part (112) of the vessel (110) and which opens upwards in the vicinity of the widening to form the cartridge outlet.

8. A filter cartridge according to Claim 7, characterised in that the vessel (110) is widened over its entire periphery.

9. A filter cartridge according to Claim 8, characterised in that the outlet opening extends over the entire periphery of the widening.

10. A filter cartridge according to Claim 8 or 9, characterised in that the circumferential wall of the upper vessel part (112) is extended beyond the widening into the lower vessel part (114) (Figure 8).

11. A filter cartridge according to Claim 10, characterised in that the circumferential wall of the upper vessel part (112) ends at a distance from the vessel bottom (116).

12. A filter cartridge according to Claim 11, characterised in that the circumferential wall of the upper vessel part (112) extends down to the vessel bottom (116) so as to limit the filling to the region of the vessel interior surrounded thereby and is provided thereabove with slots (124) for forming a passage opening covered in sieve-like manner.

## Revendications

1. Cartouche filtrante pour améliorer la qualité de l'eau potable, composée d'un récipient rempli d'une résine d'échangeur d'ions et/ou de charbon actif ainsi que d'une matière à effet bactériostatique, particulièrement de l'argent, sous une forme dissociable, recipient ayant des orifices masqués à la manière de tamis pour un passage de l'eau essentiellement de haut en bas, caractérisée par le fait que le récipient (10, 60) présente seulement dans sa zone basse un compartiment collecteur (24, 32, 40, 48, 56, 70) partant de son fond et destiné à une quantité d'eau limitée retenue dans la zone basse de la cartouche, compartiment collecteur étant séparé de l'orifice de sortie (20, 26, 34, 44, 52, 74).

2. Cartouche filtrante selon la Revendication 1, caractérisée par le fait que l'orifice de sortie (20) est disposé à distance au-dessus du fond fermé (22) du récipient sur la paroi latérale ou enveloppe (12) du récipient et que le compartiment collecteur (24) est formé par la partie du récipient formée en-dessous (fig.1).

3. Cartouche filtrante selon la Revendication 1, caractérisée par le fait que l'orifice de sortie (26,34) est disposé sur le fond du récipient (10) et présente une section inférieure à la surface du fond et que la partie fermée de la surface du fond (28, 38) est disposée, en totalité ou en partie plus bas que la partie qui contient l'orifice de sortie (26, 34) (figures 2 et 3).

4. Cartouche filtrante selon la Revendication 1, caractérisée par le fait que l'orifice de sortie (44,52) est disposé au fond du récipient (10) et présente une section inférieure à la surface du fond et que la partie fermée de la surface du fond (42, 52) est séparée de l'orifice de sortie (44? 52) par une paroi (46, 54) faisant saillie sur le fond (figures 4 et 5)

5. Cartouche filtrante selon l'une des revendications précédentes caractérisée par le fait qu'au moins un élément de structure capillaire (72) s'étend, du compartiment collecteur (70) vers le haut jusque dans la zone supérieure du récipient.

6. Cartouche filtrante selon la revendication 5, caractérisée par le fait que l'élément (72) est une mèche de non-tissé.

7. Cartouche filtrante pour améliorer la qualité de l'eau potable, composée d'un récipient rempli sous une forme dissociable d une résine d'échangeur d'ions et/ou de charbon actif ainsi que d'une matière à effet bactériostatique, particulièrement de l'argent, ayant des orifices masqués à la manière de tamis pour un passage de l'eau essentiellement de haut en bas, caractérisé par le fait que le récipient présente seulement dans sa zone basse un compartiment collecteur partant de son fond pour retenir une quantité d'eau limitée et que le compartiment collecteur est formé dans une partie inférieure (114) du récipient s'élargissant brusquement par rapport à une partie supérieure (112) du récipient, laquelle, dans la zone de l'élargissement, s'ouvre vers le haut pour former la sortie de la cartouche.

8. Cartouche filtrante selon la revendication 7, caractérisée par le fait que le récipient (110) s'élargit sur toute sa périphérie.

9. Cartouche filtrante selon la revendication 8, caractérisée par le fait que l' orifice de sortie s'étend sur toute la périphérie de l'élargissement.

10. Cartouche filtrante selon la revendication 8 ou 9, caractérisée par le fait que l'enveloppe de la partie supérieure (112) se prolonge au-delà de l'élargissement en pénétrant dans la partie inférieure du récipient (114) (figure 8).

11. Cartouche filtrante selon la revendication 10, caractérisée par le fait que l'enveloppe de la partie supérieure du récipient (112) ne s'étend pas jusqu'au fond du récipient (116).

12. Cartouche filtrante selon la revendication 11, caractérisée par le fait que l'enveloppe de la partie supérieure du récipient se prolonge jusqu'au fond (116) du récipient pour limiter le remplissage sur la zone entourée par elle de l'intérieur du récipient et est pourvue au-dessus de celui-ci de fentes (124) pour former un orifice de passage recouvert à la manière d'un tamis.
